# EUROPÄISCHE PATENTSCHRIFT

(11) **EP 0 583 450 B1**
(45) Veröffentlichungstag und Bekanntmachung des Hinweises auf die Patenterteilung: **03.09.1997**
(21) Anmeldenummer: 93903820.4
(22) Anmeldetag: 24.02.1993
(51) Int. Cl.: B24B 23/03, B23Q 17/10

(54) **EXZENTERTELLERSCHLEIFER**
ECCENTRIC DISC GRINDER
MEULEUSE A DISQUE EXCENTRIQUE

(30) Priorität: 04.03.1992 DE 4206753
(43) Veröffentlichungstag der Anmeldung: 23.02.1994
(73) Patentinhaber: ROBERT BOSCH GMBH, 70442 Stuttgart (DE)
(72) Erfinder: HORNUNG, Friedrich, D-7000 Stuttgart 80 (DE); GÜNTHER, Klaus, D-7000 Stuttgart 80 (DE); UPPHOFF, Bernd, D-7022 Leifelden-Echterdingen (DE); PFAUNDLER, Julian, D-7302 Ostfildern 3 (DE)
(86) Internationale Anmeldenummer: DE9300157
(87) Internationale Veröffentlichungsnummer: WO9317828

(56) Entgegenhaltungen:
- EP-A- 0 320 599
- DE-A- 3 103 286
- FR-A- 1 142 933

## Beschreibung

### Stand der Technik

Die Erfindung geht aus von einem Exzentertellerschleifer nach dem Oberbegriff des Anspruchs 1. Ein solcher Exzentertellerschleifer ist aus EP-A- 320 599 bekannt.

Gattungsgemäße Exzentertellerschleifer sind seit mehreren Jahren im freien Handel erhältlich. Diese Exzentertellerschleifer haben, wenn sie mit laufendem Motor vom Werkstück abgehoben werden, den Nachteil, daß in der feinsten Bearbeitungsstufe, d.h. während sich der Schleifteller nur infolge der Lagerreibung mit ca. 200 Min⁻¹ um seine Achse dreht, dieser infolge der Lagereibung zwischen der Abtriebswelle und dem Exzenterzapfen auf die Leerlaufdrehzahl der Abtriebswelle hochdreht, die bis zu 13 000 U/min beträgt. Das Hochdrehen kann dazu führen, daß bei Aufsetzen des mit hoher Geschwindigkeit rotierenden Schleiftellers auf das Werkstück so viel Werkstoff abgetragen wird, daß ein nicht reparabler Schaden an der zu bearbeitenden Werkstückoberfläche entsteht.

Durch eine den gattungsgemäßen Exzentertellerschleifer weiterentwikkelnden Exzentertellerschleifer gemäß der EP-PS 320 599 ist eine elektromagnetische Bremse zwischen dem Schleifteller und dem Exzentertellerschleifergehäuse angeordnet, die das Hochdrehen des Schleiftellers verhindern soll. Diese elektromagnetische Bremse ist recht wirkungsvoll, hat aber den Nachteil, daß zusätzliche Bremsenergie benötigt wird, um die Hochdrehenergie zu kompensieren. Hier wird also Energie verschwendet. Für die elektromagnetische Bremseinrichtung ist außerdem ein hoher konstruktiver Aufwand nötig, wobei sich Masse und Volumen des Exzentertellerschleifers deutlich erhöhen.

Durch die US-A 5 018 314 ist ein Exzentertellerschleifer bekannt, der, basierend auf dem gattungsgemäßen Exzentertellerschleifer, mit mechanischen Mittel das Hochdrehen des Schleiftellers verhindern soll. Auch in diesem Fall wird die Hochdrehenergie "vernichtet".

### Vorteile der Erfindung

Der erfindungsgemäße Exzentertellerschleifer mit den kennzeichenden Merkmalen des Anspruchs 1 hat demgegenüber den Vorteil, daß durch Drosseln der dem Motor zugeführten Energie der Hochdreheffekt gar nicht erst zustande kommt. Dies hat den Vorteil, daß Energie gespart, Geräusch- und Vibrationsminderungen im Leerlauf erreicht werden, die Lebensdauer erhöht, sowie Gewicht und Volumen des Exzentertellerschleifers gering gehalten werden.

Weitere, vorteilhafte Ausgestaltungen der Erfindung ergeben sich aus den abhängigen Ansprüchen.

### Zeichnung

Ausführungsbeispiele der Erfindung sind in der nachfolgenden Beschreibung anhand der zugehörigen Zeichnung näher erläutert.

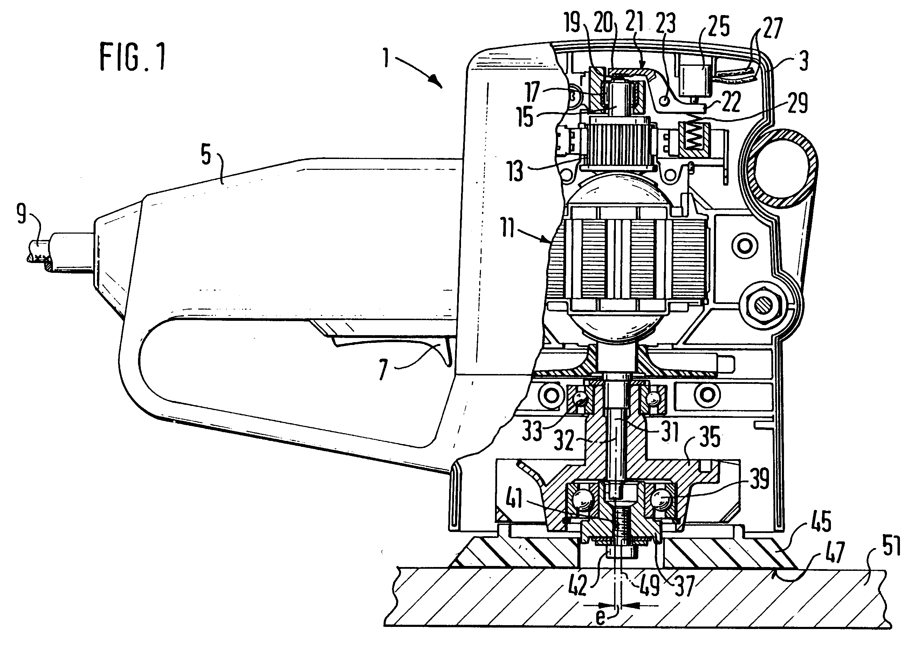

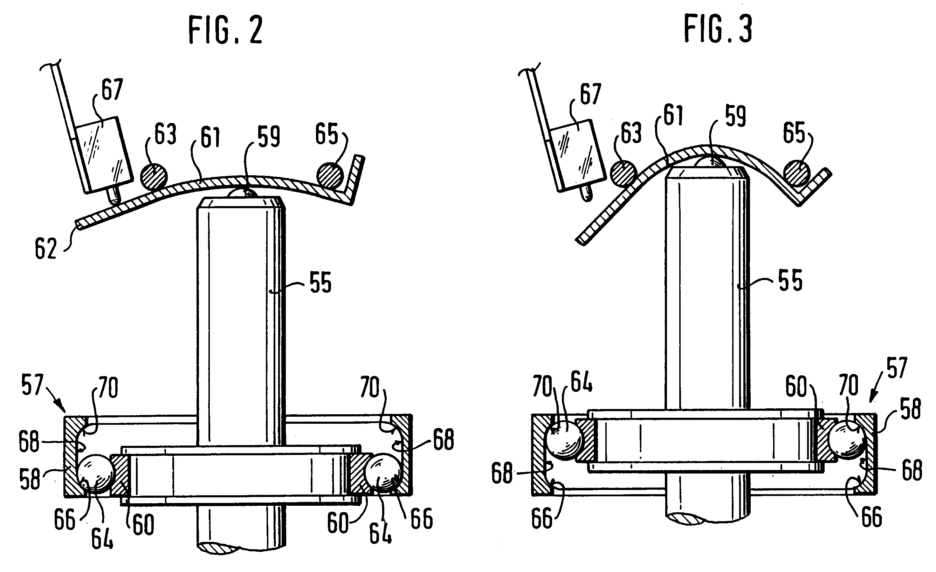

Es zeigen Figur 1 eine seitliche Schnittdarstellung eines Ausführungsbeispiels des Exzentertellerschleifers, Figur 2 einen vergrößerten Ausschnitt eines weiteren Ausführungsbeispiels eines Exzentertellerschleifers im Bereich der Regelmechanik, Figur 3 das Ausführungsbeispiel der Figur 2 in der zweiten möglichen Schaltstellung.

### Beschreibung des Ausführungsbeispieles

Der in Figur 1 im seitlichen Schnitt dargestellte Exzentertellerschleifer 1 setzt sich zusammen aus einem Gehäuse 3 mit einem Griff 5, in dem ein Ein- und Ausschalter 7 sowie ein Elektroanschlußkabel 9 angeordnet sind. Im Inneren des Gehäuses 3 ist ein Motor 11 mit einem Kollektor 13 sowie einem Wellenzapfen 15, geführt in einem oberen Wellenlager 17 angeordnet. In der Stirnseite des Wellenzapfens 15 sitzt eine Kugel 19, an der sich ein Ende 20 eines zweiarmigen Hebels 21 abstützt. Der zweiarmige Hebel 21 ist um einen Drehpunkt 23 wippbar im Gehäuse 3 angeordnet. Ein dem Wellenzapfen 15 abgewandtes Ende 22 des zweiarmigen Hebels 21 stützt sich gegen einen Mikro-Schalter 25 mit elektrischen Anschlüssen 27, die zu nicht dargestellten, elektronischen Regelelementen führen, die zwischen das elektrische Anschlußkabel 9 und die elektrischen, nichtdargestellten Anschlüsse des Motors 11 geschaltet sind. Am sich am Mikro-Schalter 25 abstützenden Ende 22 des zweiarmigen Hebels 21 stützt sich eine vorgespannte Rückstellfeder 29 ab. Diese sucht sowohl den Mikro-Schalter 25 als auch den Wellenzapfen 15 in einer Endstellung zu halten.

Im dem oberen Wellenlager 17 abgewandten Teil des Gehäuses 3 erstreckt sich eine um eine Achse 32 drehbare Abtriebswelle 31, die in einem unteren Wellenlager 33 axial verschieblich gelagert ist. Am freien Ende der Abtriebswelle 31 ist drehfest ein Exzenterträger 35 angeordnet, der einen Exzenterzapfen 37 trägt. Der Exzenterzapfen 37 ist zur Achse 32 um einen Betrag "e" (Exzentrizität) versetzt und in einem Wälzlager 39 gelagert. Im Exzenterzapfen 37 ist eine zentrale Gewindebohrung 41 angeordnet, in der eine Schraube 42 festgehalten wird, die einen Schleifteller 45 drehfest am Exzenterzapfen 37 festhält. Auf der dem Gehäuse 3 abgewandten, freien Seite des Schleiftellers 45 befindet sich die eine Arbeitsfläche 47.

Der Exzenterträger 35 dient zugleich als Lüfterrad, das ausgewuchtet ist, indem die Ausgleichsmassen in die strömungstechnische Struktur integriert sind.

Bei Drehung der Abtriebswelle 31 führt der Schleifteller 45 eine kreisende Bewegung um die Achse 32 mit dem Radius "e" aus. Gleichzeitig führt der Schleifteller 45 infolge einer beabsichtigten Reibung im Wälzlager 39 eine Rotation um seine Achse 49 aus.

Beim Aufsetzen des Exzentertellerschleifers 1 auf ein Werkstück 51 verschiebt sich dessen Gehäuse 3 durch sein Eigengewicht gegenüber dem Schleifteller 45 bzw. gegenüber der Abtriebswelle 31 so, daß der Wellenzapfen 15 seine obere Endlage gegen die Kraft der Rückstellfeder 29 erreicht. Dabei wird der zweiarmige Hebel 21 im Uhrzeigersinn entgegen der Kraft der Rückstellfeder 29 verschwenkt, so daß der Mikro-Schalter 25 so entlastet wird, daß er sich infolge einer, in seinem Inneren wirkenden, nichtdargestellten Feder in die Schaltstellung "Aus" einstellt.

Wird der Exzentertellerschleifer 1 vom Werkstück 51 abgehoben, verschiebt sich der Schleifteller 45 axial weg vom Gehäuse 3, wobei ihm die Antriebwelle 31 durch die Kraft der Rückstellfeder 29 verschoben, folgt. Dadurch wird der Wellenzapfen 15 in seine untere Totpunktlage verschoben. Ihm folgt dabei der zweiarmige Hebel 21 entgegen dem Uhrzeigersinn im Richtungssinn dar Kraft der Rückstellfeder 29. In dieser Position steht der Mikro-Schalter 25 in der Schultstellung "Ein". Damit ist die nichtdargestellte Regelelektronik im Leistungsstromkreis aktiviert und drosselt die Leistungszufuhr zum Motor 11 derart, daß die Drehzahl des Motors 11 auf ein definiertes Minimum sinkt.

So ist beispielsweise die dem Motor zugeführte Spannung von 220 V auf 80 V mittels eines Thyristors oder eines Triac durch Phasenschnitt in Art einer Dimmer-Schaltung reduzierbar. Dadurch sinkt die Motordrehzahl von beispielsweise 13 000 U/min auf 4 000 Umdrehungen, die höchstmögliche Tellerdrehzahl infolge Hochdrehens kann nun noch maximal 4 000 U/min statt wie bisher 13 000 U/min erreichen. Wird der Schleifteller 45 wieder auf das Werkstück 51 aufgesetzt, so kann bei dieser Drehzahl des Schleiftellers 45 nur geringfügig mehr als beim Feinschliff bzw. als zunächst beabsichtigt abgetragen werden. Das Schliffbild ist nach wenigen Umdrehungen des Schleiftellers vollständig ausgeglichen, die beabsichtigte Arbeitsqualität wird mit Sicherheit erreicht.

Bei vom Werkstück 51 abgehobenen Schleifteller 45 wird mit dem erfindungsgemäßen Exzentertellerschleifer 1 bei eingeschaltetem Motor Energie gespart, der Verschleiß und die Geräusche gemindert, weil die maximale Antriebsleistung nur dann zur Verfügung gestellt wird, wenn sie tatsächlich benötigt wird.

Das in Figur 2 als Einzelheit eines Exzentertellerschleifers gezeigte Ausführungsbeispiel einer Regelmechanik zeigt einen oberen Wellenzapfen 55 in seiner unteren Endlage bei in Normallage von einem Werkstück abgehobenem Exzentertellerschleifer. Der obere Wellenzapfen 55 ist in einem Spezial-Kugellager 57 mit besonders ausgestaltetem, verbreitertem Außenring 58 gelagert. Die obere Stirnseite des Wellenzapfens 55 ist kugelig ausgestaltet, wobei vorzugsweise eine Kugel 59 eingelassen ist, auf der sich ständig in Punktberührung, verschleißmindernd eine Blattfeder 61 abstützt. Außerdem stützt sich die Blattfeder 61 auf der der Kugel 59 abgewandten Seite an zwei Widerlagern 63, 65 ab. Am freien Ende 62 der Blattfeder 61 stützt sich ein Mikro-Schalter 67 ab. Der Mikro-Schalter 67 befindet sich in seiner eingeschalteten, d. h. in seiner aktivierten Stellung. Dabei leitet er den elektrischen Strom über nicht dargestellte elektronische, die Motorleistung drosselnde Schaltelemente.

Ein Innenring 60 des Spezial-Kugellagers 57 befindet sich in einer dem Mikro-Schalter 67 fernen Position in einer Endlage, wobei der Wälzkörper 64 an der konkaven Krümmung 66 der Laufbahn 68 des Spezial-Kugellagers 57 zur Anlage kommt. Die untere Endlage des Wellenzapfens 55 stellt sich infolge des Eigengewichts des Schleiftellers sowie der Motorteile ein und wird von der vorgespannten Blattfeder 61 unterstützt.

Die Figur 3 zeigt das gleiche Ausführungsbeispiel wie die Figur 2, jedoch in der oberen Endlage des Wellenzapfens 55 bei in Normallage auf ein Werkstück gesetztem Exzentertellerschleifer. Dabei ist die Lage des Wellenzapfens 55 durch die zweite konkave Krümmung 70 der Laufbahn des Spezialkugellagers 57 bestimmt. In dieser Position ist die Blattfeder 61 so stark gekrümmt, daß das freie Ende 62 einen Abstand zum Mikro-Schalter 67 aufweist. Dadurch ist der Mikro-Schalter 67 in seiner "Aus"-Stellung, in der die elektronischen Schaltelemente nicht wirksam sind, somit die dem Motor zugeführte elektrische Leistung nicht gedrosselt ist.

Aus den Figuren 2 und 3 wird deutlich, daß die Blattfeder 61 sowohl die Rückstellkraft zum Herstellen der Normallage der Abtriebswelle liefert als auch Betätigungsglied zum Ein- oder Ausschalten des Mikro-Schalters 67 ist.

Bei einem nichtdargestellten Ausführungsbeispiel des Exzentertellerschleifers ist anstelle eines wegabhängigen Mikro-Schalters ein kraftabhängiger Schalter, insbesondere ein Drucksensor angeordnet.

Es wird als selbstverständlich angesehen, daß die beschriebenen Ausführungsbeispiele so ausgestaltet sind, daß die Drehzahlregelung auch bei Überkopfarbeiten funktioniert, d.h., daß die Gewichtskräfte des Schleiftellers konstruktiv berücksichtigt worden sind.

## Patentansprüche

1. Exzentertellerschleifer (1) mit einem Gehäuse (3), in dem ein Motor (11) über eine Abtriebswelle (31) einen Schleifteller (45) auf einer Kreisbahn kreisend und gleichzeitig um seine Achse (49) rotierend bewegt, wobei die Abtriebswelle (31) drehfest mit einem Exzenterträger (35) gekoppelt ist, der einen, insbesondere in einem Wälzlager (39), mit einer bestimmten Lagerreibung verdrehbar und mit einer bestimmten Exzentrizität 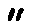 e" zur Abtriebswelle (31) gelagerten, drehfest mit dem Schleifteller (45) gekoppelten Exzenterzapfen (37) trägt, der mit der Exzentrizität 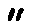 e" um die Achse (32) der Abtriebswelle (31) kreist und infolge der Lagerreibung gleichzeitig um seine eigene Achse (49) bzw. um die des Exzenterzapfens (37) rotiert, dadurch gekennzeichnet, daß eine elektrische Regelung die die Drehzahl des Schleiftellers (45) bestimmende Motordrehzahl bei auf die Arbeitsfläche (47) des Schleiftellers (45) wirkender, geringer Normalkraft niedrig und bei hoher Normalkraft hoch einstellt, wobei die auf den Schleifteller (45) wirkende Normalkraft als Stellgröße der Motordrehzahlregelung dient, ein Mikro-Schalter (25) die auf den Schleifteller (45) wirkende Normalkraft abtastet und sobald diese kleiner als eine Referenzkraft ist, eine niedrige Motordrehzahl und sobald diese größer ist als die Referenzkraft, eine höhere Motordrehzahl einstellt, wobei der Mikro-Schalter (25) über sich auf einem Werkstück (51) abstützende Verschiebemittel betätigt wird und einen die dem Motor (11) zuführbare Leistung steuernden Schaltkreis aktiviert.

2. Exzentertellerschleifer nach Anspruch 1, dadurch gekennzeichnet, daß der Schleifteller (45) und/oder der Motor (11) axial im Gehäuse (3) verschiebbar sind und dabei den Mikro-Schalter (25) betätigen.

3. Exzentertellerschleifer nach Anspruch 4, dadurch gekennzeichnet, daß der Schleifteller (45) und/oder der Motor (11) entgegen einer Federkraft verschiebbar ist.

4. Exzentertellerschleifer nach Anspruch 3, dadurch gekennzeichnet, daß der Schleifteller (45) in zwei, vorzugsweise entgegengesetzten, axialen Positionen einrastbar arretierbar ist.

5. Exzentertellerschleifer nach einem der Ansprüche 1 bis 4, dadurch gekennzeichnet, daß der Verschiebeweg beim Aufsetzen des Exzentertellerschleifers (1) auf ein Werkstück (51) auf eine Blattfeder (51) übertragen wird, die den Mikro-Schalter (25) betätigt.

6. Exzentertellerschleifer nach Anspruch 5, dadurch gekennzeichnet, daß ein freies Ende der mittels des Schleiftellers (45) verschiebbaren Welle, Motorwelle (15) oder einer entsprechenden Zwischenwelle über Punktberührung eine sich an zwei Widerlagern (63, 65) abstützende, vorgespannte Blattfeder (61) verformt und daß deren freies Ende (62) den Mikro-Schalter (67) betätigt.

## Claims

1. Eccentric disc grinder (1) having a housing (3) in which, via an output shaft (31), a motor (11) moves a grinding disc (45) in circulation on a circulatory path and, at the same time, in rotation around its axis (49), the output shaft (31) being coupled in a rotationally fixed manner to an eccentric carrier (35) which bears an eccentric journal (37) which is coupled in a rotationally fixed manner to the grinding disc (45) and is mounted, in particular in a rolling-contact bearing (39), with a certain eccentricity "e" with respect to the output shaft (31) and such that it can be rotated with a certain bearing friction, said grinding disc (45) circulating around the axis (32) of the output shaft (31) with the eccentricity "e" and, as a result of the bearing friction, rotating, at the same time, around its own axis (49) or around that of the eccentric journal (37), characterized in that the motor speed which determines the speed of the grinding disc (45) is set, by means of an electric control means, to a low value in the event of a low normal force acting on the operating surface (47) of the grinding disc (45) and to a high value in the event of a high normal force, the normal force which acts on the grinding disc (45) serving as a manipulated variable of the motor-speed control means, a microswitch (25) senses the normal force acting on the grinding disc (45) and, as soon as this force is smaller than a reference force, sets a low motor speed and, as soon as this force is greater than the reference force, sets a higher motor speed, the microswitch (25) being actuated via displacement means supported on a workpiece (51) and activating a circuit which controls the power which can be supplied to the motor (11).

2. Eccentric disc grinder according to Claim 1, characterized in that the grinding disc (45) and/or the motor (11) can be displaced axially in the housing (3) and actuate the microswitch (25) in the process.

3. Eccentric disc grinder according to Claim 2, characterized in that the grinding disc (45) and/or the motor (11) can be displaced counter to a spring force.

4. Eccentric disc grinder according to Claim 3, characterized in that the grinding disc (45) can be arrested latchably in two, preferably opposite, axial positions.

5. Eccentric disc grinder according to one of Claims 1 to 4, characterized in that, when the eccentric disc grinder (1) is positioned on a workpiece (51), the amount of displacement is transmitted to a leaf spring (61) which actuates the microswitch (25).

6. Eccentric disc grinder according to Claim 5, characterized in that a free end of the shaft, motor shaft (15) or a corresponding intermediate shaft, which can be displaced by means of the grinding disc (45), deforms, by way of point contact, a prestressed leaf spring (61) supported on two abutments (63, 65), and in that the free end (62) of said leaf spring actuates the microswitch (67).

## Revendications

1. Ponceuse à disque excentrique (1) qui comprend un carter (3) dans lequel un moteur (11) fait tourner, par l'intermédiaire d'un arbre de sortie (31), un disque de ponçage (45) qui décrit une piste circulaire et, en même temps, tourne autour de son axe (49), l'arbre de sortie (31) étant couplé de façon solidaire en rotation avec un support d'excentrique (35) qui porte un tourillon d'excentrique (37) couplé de façon solidaire en rotation avec le disque d'excentrique (45), et monté en particulier dans un palier à roulement (39) de façon à pouvoir tourner avec un frottement de palier déterminé et en étant monté avec une excentricité déterminée "e" par rapport à l'arbre de sortie (31), le tourillon d'excentrique (37) décrivant un cercle d'excentricité "e" autour de l'axe (32) de l'arbre de sortie (31) et, par suite du frottement du palier, tournant en même temps autour de son propre axe (49) ou autour de celui du tenon d'excentrique (37),
caractérisée en ce qu'
une régulation électrique règle la vitesse de rotation du moteur qui détermine la vitesse de rotation du disque de ponçage (45), sur une valeur basse quand la force perpendiculaire qui agit sur la surface de travail (47) du disque de ponçage est faible, et sur une valeur élevée quand la force perpendiculaire est élevée, la force perpendiculaire qui agit sur le disque de ponçage (45) servant de grandeur de réglage pour la régulation de la vitesse de rotation du moteur, un micro-interrupteur (25) palpant la force perpendiculaire qui agit sur le disque de ponçage (45) et établissant, dès que celle-ci est plus petite qu'une force de référence, une vitesse de rotation basse et dès que celle-ci est plus grande que la force de référence, une vitesse de rotation plus élevée du moteur, le micro-interrupteur (25) étant actionné par l'intermédiaire d'un organe de déplacement qui prend appui sur une pièce à oeuvrer (51), et actionnant un circuit qui commande la puissance pouvant être fournie au moteur (11).

2. Ponceuse à disque excentrique selon la revendication 1,
caractérisée en ce que
le disque excentrique (45) et/ou le moteur (11) peuvent coulisser axialement dans le carter(3), et dans ce cas, actionner le micro-interrupteur (25).

3. Ponceuse à disque excentrique selon la revendication 2,
caractérisée en ce que
le disque excentrique (45) et/ou le moteur (11) peuvent coulisser à l'encontre de la force d'un ressort.

4. Ponceuse à disque excentrique selon la revendication 2,
caractérisée en ce que
le disque excentrique (45) peut être bloqué de façon encliquetable dans deux positions axiales, de préférence opposées.

5. Ponceuse à disque excentrique selon l'une des revendications 1 à 4,
caractérisée en ce que
la course du déplacement, quand on pose la ponceuse à disque excentrique (1) sur une pièce à oeuvrer (51), est transmise à un ressort à lame (61) qui actionne le micro-interrupteur (25).

6. Ponceuse à disque excentrique selon la revendication 5,
caractérisée en ce que
l'on déforme une extrémité libre de l'arbre qui peut coulisser au moyen du disque de ponçage (45), de l'arbre du moteur (15) ou d'un arbre intermédiaire correspondant, par mise en contact ponctuel avec un ressort à lame (61) précontraint, prenant appui sur deux contre-appuis (63, 65), et
l'extrémité libre de ce ressort (62) actionne le micro-interrupteur (67).
